Europäisches Patentamt

European Patent Office

Office européen des brevets

(11) Publication number: **0 235 675**
**A2**

# (12) EUROPEAN PATENT APPLICATION

(21) Application number: **87102279.4**

(22) Date of filing: **18.02.87**

(51) Int. Cl.⁴: **A 01 J 25/11, A 01 J 25/16**

(30) Priority: **26.02.86 IT 1955486**

(43) Date of publication of application: **09.09.87**
**Bulletin 87/37**

(84) Designated Contracting States: **AT BE CH DE FR GB IT LI NL**

(71) Applicant: **FORMA S.r.l., Galleria Passarella, 2, I-20122 Milano (IT)**

(72) Inventor: **Zanetti, Rita, Via Angera 18, I-20100 Milano (IT)**

(74) Representative: **Giambrocono, Alfonso, Dr. Ing. et al, Ing. A. Giambrocono & C. S.r.l. Via Rosolino Pilo 19/B, I-20129 Milano (IT)**

(54) **Two like side trays for supporting cheese moulds.**

(57) The invention relates to a tray (1, 2, 10) for supporting cheese moulds (13). The tray has two like sides or faces defined by a plurality of planes which are slanted from the tray center toward the periphery thereof. Along the tray periphery and in the inside of it, the tray comprises a plurality of through-going shaped holes (4, 5) for discharging the whey draining from the cheese and respectively freely circulating air. On each of the two surfaces of the tray a removable mat (10) may be affixed.

On the upward turned surface of a mat (10) arranged on the tray (1, 2) there are located moulds (13) adapted for holding single rennet doses for forming cheese; above these moulds the mat (10) is arranged applied to the lower surface of another like tray, and so on as to provide tray stacks enclosing moulds (13) therebetween. The stacks may easily be tilted as a single package thereby allowing for the cheese units to ripen without any contact by the operator hands.

## DESCRIPTION

The present invention relates to a two like sides tray for supporting moulds for holding cheese during the several processing steps of whey draining, salting and seasoning.

As is known as rennet is added to milk, a solid mass precipitates therefrom which is called "curdy mass" : this curdy mass is divided into portions in suitable moulds. From these curdy portions the whey is drained and removed: during the whey draining step, the moulds (holding the curdy portions) are reversed, usually for a lot of times. At the whey draining step end, the mould formed cheese units are immersed (together the moulds) into a salt solution and then they are subjected to a further draining step, with further reversing of the moulds. If the moulds rest on conventional tray member, even if these trays have a slotted configuration, it is necessary to oscillate the trays in order to drain whey. In each case the cheese units and related moulds are individually reversed or tilted one at a time.

The cheese units which have been made as above disclosed are successively sent to seasoning cells therein they are repeatedly manually reversed again in order to provide an even sesoning.

The above disclosed method is affected by several drawbacks related to the need of using a number of operators for reversing the moulds and oscillating them in order to drain the cheese whey and to the fact that the cheese units being formed are necessarily contacted by the operator hands and then they are
not bacteriologically pure.

The main object of the present invention is
to provide a tray for supporting cheese moulds which
affords the possibility of making stacks of trays
alternating with cheese moulds, thereby the stacks
may be reversed as a single unit together with the
moulds to automatically reverse all of the cheeses
held in the moulds of a given stack.

Another object is to provide such a tray
which affords the possibility of safely and completely removing the whey draining from the moulds and
evenly aerating the whole cheeses arranged at any
points of the tray.

Another object is to provide a tray including
mats for supporting the cheese moulds which mats may
be easily removed and replaced to sterilize them
and firmly anchored to the trays in order to be subjected, together with said trays, to possible washing
steps.

According to one aspect of the present invention the above and other objects are achieved by a
tray including a frame projecting from the periphery
of a strong wall with two substantially equal outer
opposite surfaces so as the tray comprises two
substantially like sides, said wall being traversed by
peripheral holes adjacent said frame and intermediate
holes encompassing wall portions having a decreasing
thickness from the center middle portion of the tray
toward said frame, thereby defining outer flat surfaces
which are slanted from the tray center toward the

periphery thereof, ribs projecting from said wall
portions, the outward turned free edges of said ribs
being mutually coplanar and acting as resting members
for at least a perforated mat which is removably
held on the tray by fin members projecting from said
frame toward the inside of the tray, at least a mat
being provided on each of the two outer opposite
surfaces of said wall.

Preferably on each of the two outer surfaces
of said wall there is applied a mat made as a single
piece and so shaped as to be inserted into the space
defined by said frame, said mat being formed with
holes which may be superimposed on and are like to
the middle holes passing through said wall.

Also preferably, the outer free edges of said
wall, in the region of smaller thickness of said wall,
are provided with a step bevel adapted to act as a
drop breaking member for the whey draining from the
tray.

Advantageously, the tray according to the
invention may be used with multiple cheese moulds
consisting of a plurality of individual mouls rigid
with one another to form a strong assembly which may
be housed inside the tray frame, with each of the single
moulds being superimposed onto one of said wall
portions encompassed by said holes passing through
said wall.

The invention will become more apparent thereinafter from the following disclosure of a preferred
embodiment of the tray according to the invention
which is given by way of a not limitative example with
reference to the accompanying drawings, where:

4 0235675

fig.1 is a perspective view of one of the like sides or faces of the tray;

fig.2 is a perspective view of the mat which may be affixed to the tray;

fig.3 is a perspective view of a multiple cheese mould which may be used with the subject tray;

figs 4 and 5 are two cross-sectional views of the tray taken along the lines IV-IV and V-V of figure 1;

fig.6 is a longitudinal cross-sectional partial view of the tray taken along the line VI-VI of fig.1 and

fig.7 is a cross-sectional view illustrating a stack formed by trays with the related affixed mats and with cheese moulds between a tray and the following one.

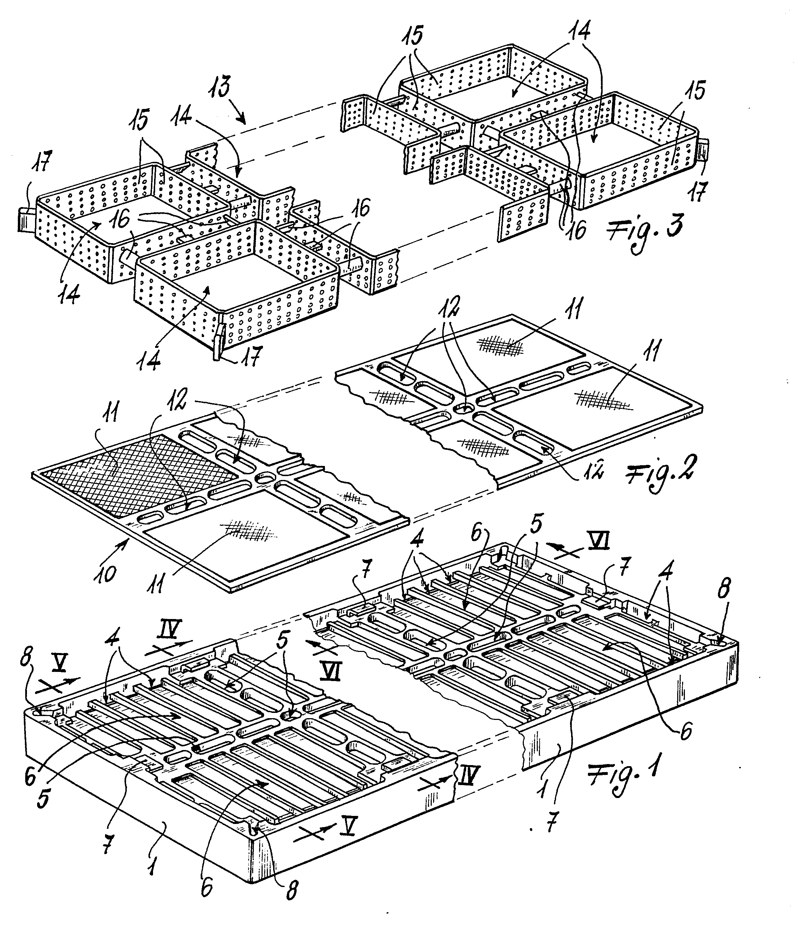

With reference firstly to figs.1,4 and 5, the tray herein illustrated comprises a frame 1 which defines and enlarged and elongated strong wall 2 therefrom said frame projects.As is shown clearly in fig.2, the wall 2 has a decreasing thickness from its middle central longitudinal region toward the frame:thus,as the tray rests on a horizontal plane, the upward turned surfaces of the wall 2 form slanted planes which are slanted from the center middle line of the tray toward the longitudinal edges of the frame.

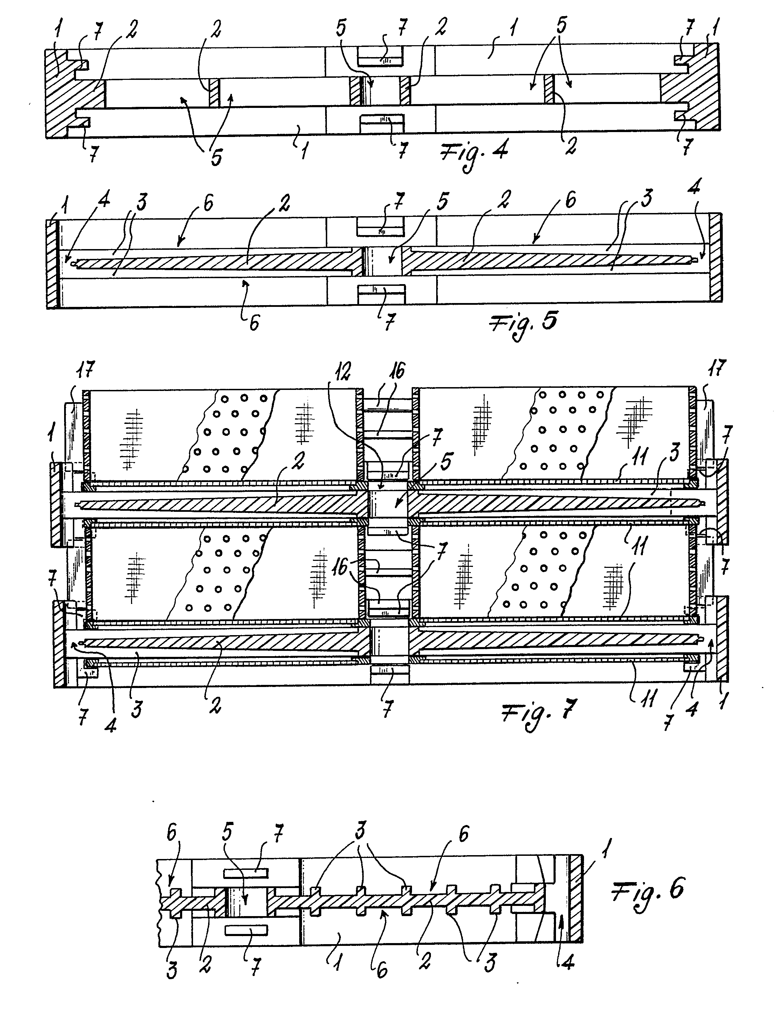

From the outward turned surfaces of the wall 2 rectilinear cross ribs 3 project which are parallel to one another and the outward turned free edges of which are mutually coplanar, as is clearly shown in figures 5 and 6.

The wall 2 is not continuous, but it is
traversed by a plurality of peripheral holes 4 and
a plurality of middle holes 5 encompassing wall
portions, indicated at 6, thereat the wall is devoid
of holes.

The free edges of the wall portions 6, thereat
they end at the peripheral holes 4, are beveled with
step configuration (as is clearly shown in figures
5 and 7), thereby forming drop breaking members for
the liquid(whey) flowing through the top slanted
surface of the  wall, thereby preventing the liquid
drops from sliding or flowing to the tray center, by
flowing on the lower free surface of the wall 2.

From the figures it should be apparent that
fin members 7 project to the inside of the frame
(which fin members are provided for holding a mat
which will be disclosed hereinafter) and that recesses
8 are formed at the corners of the frame.

It should moreover be pointed out that
figure 1 shows the top side or face of the tray and
that the tray lower side is identical to the top side
thereof(as is shown in figs.4 to 7), thereby it is
possible to arrange the tray on a plane with either
sides in an indifferent way, since, in each case, the
upward turned side thereof will always have the same
configuration.

With reference to figure 2 which is a perspective view of a mat 10 which may be applied to the tray
above disclosed, the mat 10 is made as a single piece
and comprises a plurality of regions or squares 11 which are traversed by small openings(the size of which will depend on the consistency or nature of the cheese to be arranged thereon) which are interrupted and separated by a plurality of holes 12.

The size and shape of the mat 12 are so designed that said mat may be housed inside the frame 1, resting on the free edges of the ribs 3 and firmly held therein by the fin members 7;since the mat is made of a single piece of flexible material(for example a plastics material) it can be easily inserted under the fin members 7 and easily removed therefrom.

It should be pointed out that the holes 12 of the mat 10 are so shaped and arranged as to be precisely superimposed on the holes 5 of the wall 2, as the mat is mounted on the tray.It should also be apparent that each side of the tray will receive a mat like the disclosed one,as is shown in figure 7.

With reference to figure 3,it is a perspective view of a multiple mould 13 which may be used with the mould and mat shown in figures 1 and 2.

The multiple mould 13,made from a plastics material and in a single piece,comprises a plurality of individual moulds 14,defined by perforated walls 15 the shape and size of which will depend on those of the whole cheeses to be produced.

The individual moulds 14 are made rigid with one another by means of a plurality of lugs 16 which connect to one another the facing walls 15 of the single moulds;from the four corners of the multiple mould 13 fin members 17 project to be inserted into the recesses 8 of the tray.

The size and shape of the multiple moulds are so designed that it may be inserted into the frame 1 of the tray and that the individual moulds 14 may be superimposed on the squares 11 of the mat and accordingly on the wall portions 6 of the tray.

All of the above disclosed parts, included the tray, are made by molding plastics material and accordingly they have a low cost and may be easily washed and sterilized.

In order to use the tray, the mat and the multiple moulds, the following procedure will be followed.

At first two mats 10 are applied to each tray, so as the mats cover the two sides of the tray, by resting on the ribs 3 and being held herein by the fin members 7; as it should be apparent, a mat will be upward facing and the other downward facing as the tray is held in a horizontal attitude.

Then on the upward facing mat the multiple mould 13 is arranged the fin members 17 of which will engage in the recesses 8 of the tray, thereby firmly locating the multiple mould on the tray so as the walls 15 of the single moulds 14 will not contact the frame 1 (and accordingly the holes formed through the walls 15 will be completely free and will permit air to freely circulate through the overall extension of the walls 15). The single moulds will be closed at the bottom by the squares 11 of the mat 10 rigid with the top face of the tray: they will be filled with controlled rennet portions and then a like tray-mat assembly will be arranged above the considered multiple mould and so on to obtain stacks of trays (and related mats) and moulds each of which will be enclosed and firmly clamped by two adjacent trays, as is schematically shown in figure 7.

These tray and mould stacks may be easily reversed as a single rigid body and may be immersed, as they are, into the cheese salting vessels.

It should be apparent that during the whey draining step and the subsequent salting step, the whey will easily drain through the openings formed through the squares 11 of the mats, from which it will drain on the slanted surfaces of the wall portions 6 of the tray and will drop through the peripheral holes 4 without dropping or draining on the single underlaying mould, since the drop breaking member provided along the free edges of the wall portions 6 will prevent it from doing this.

Thus all of the draining, salt bath immersion, further draining and seasoning operations can be carried out without contacting the cheeses and simultaneously processing a great number of cheeses.

The proper seasoning at each point of each single cheese is assured by the provision of the free holes 4 and 5 of the tray and 12 of the mat and by the fact that the holes formed through the walls 15 of the moulds will be always held in a free and aerated condition thereby also affording the possibility of precisely controlling the temperature even at the innermost regions of the trays.

After having removed the multiple moulds and seasoned cheeses therein, the moulds and related mats may be sent, as they are, to the automatic washing step; if the mats are to be sterilized, then they may easily and quickly removed from the trays and replaced by new and clean mats to be used again.

## C L A I M S

1- Two like sides tray for supporting cheese moulds, characterized in that it includes a frame (1) projecting from the periphery of a strong wall (2) having two substantially equal outer opposite surfaces so designed and arranged that the tray (1,2) has two substantially like sides, said wall (2) being traversed by peripheral holes (4) adjacent said frame (1) and intermediate holes (5) which encompass portions (6) of said wall having a decreasing thickness from the tray center middle region toward said frame (1) thereby defining outer flat surfaces which are slanted from the center to the periphery of the tray, ribs (3) projecting from said wall portions (6), the outward turned free edges of said ribs being mutually coplanar and acting as resting members for at least a perforated mat (10) which is removably held on the tray by projecting fins (7) projecting from said frame to the inside of the frame, at least a mat (10) being provided on each of the two outer opposite surfaces of said wall (2).

2- A tray according to claim 1, characterized in that on each of said two sides of the tray (1,2) there is applied a single piece single mat (10) which is so shaped as to be inserted into the space defined by said frame (1), said mat (10) being formed with throughgoing holes (12) which may be superimposed on and are like the middle holes (5) passing through said wall(2).

3- A tray according to claims 1 to 3, characterized in that it may be used with multiple cheese moulds (13) each of which consists of a plurality of single moulds (14,15) made rigid with one another to form a strong assembly which may be housed within said frame (1) of the tray (1,2), with each of the single moulds (14,15) being superimposed onto one of said wall portions (6) of the tray (1,2) encompassed by said holes (4,5) passing through said wall, the single moulds (14,15) being delimited by side walls (15) formed with a plurality of small aerating through-going holes.

Fig. 3

Fig. 2

Fig. 1

Fig. 4

Fig. 5

Fig. 7

Fig. 6